(19) Europäisches Patentamt / European Patent Office / Office européen des brevets

(11) EP 4 592 435 A1

(12) **EUROPEAN PATENT APPLICATION**
published in accordance with Art. 153(4) EPC

(43) Date of publication:
30.07.2025 Bulletin 2025/31

(21) Application number: 23881858.7

(22) Date of filing: 25.10.2023

(51) International Patent Classification (IPC):
*D04B 1/00* (2006.01)

(52) Cooperative Patent Classification (CPC):
B32B 1/08; B32B 5/08; B32B 25/10; B32B 25/12;
B32B 27/00; B32B 27/12; D04B 1/18; D04B 1/225;
D04B 9/44; D10B 2505/00

(86) International application number:
PCT/CN2023/126322

(87) International publication number:
WO 2024/088281 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.10.2022 CN 202211326119

(71) Applicant: Yan, Chuan
Huaihua, Hunan 418000 (CN)

(72) Inventor: Yan, Chuan
Huaihua, Hunan 418000 (CN)

(74) Representative: Metida
Gyneju str. 16
01109 Vilnius (LT)

(54) **COMPOSITE STRUCTURE ELASTIC TUBE AND MANUFACTURING METHOD THEREFOR**

(57) The invention provides a composite structure elastic tube and a preparation method thereof. The composite elastic tube includes an inner elastic tube, an elastic woven layer, a junction of inner and outer tubes and an outer elastic tube, wherein the composite elastic tube is sequentially composed of the inner elastic tube, an elastic woven layer, the junction of inner and outer tubes and the outer elastic tube from an inner side to an outer side. The invention by providing a reasonable axial helix angle and a reasonable radial helix angle in the radial direction between the elastic cored yarn of the elastic woven layer and the inner elastic tube, the elastic cored yarn is a combination of layers arranged, which may ensure that on the original basis, the elastic woven layer may be stretched to a limit of 7-8 without deformation while still maintaining good bonding strength.

Fig. 1

EP 4 592 435 A1

**Description**

## FIELD OF THE INVENTION

The present invention relates to the technical field of rubber tubes, in particular to a composite structure elastic tube and a preparation method thereof.

## BACKGROUND OF THE INVENTION

Existing elastic tubes are generally low-elastic composite tubes with less than 2 times the elasticity or high-elastic pure rubber tubes with more than 3 times the elasticity. This type of rubber tube is favored by more and more people because of the light weight, being easy to carry, and having good practicability.

The telescopic water tube made of the elastic tube needs to be extended by 1-3 times in the axial direction and 1-3 times radially expanded synchronously. The telescopic water tube made of the pure rubber tube are often prone to explosion when the molecules are extended under the action of water pressure because of exceeding the molecular extension limit or aging limit. However, if a composite layer that can control the axial and radial extension limits is added to the elastic tube, the scalability will be seriously deteriorated due to the limitation of materials and preparation technology.

In the application of bodybuilding and fitness tensioners with elastic rubber tubes as elastic apparatuses, it is often necessary to repeatedly stretch the elastic rubber tube by more than 1-8 times; therefore, similarly, since under the action of tension, the elastic molecules will break when they exceed the molecular extension limit or are subjected to aging limit, which not only makes the number of times the product can be used unguaranteed, but also often causes safety accidents that hurt people due to breakage. However, if the composite layer that can control the axial and radial extension limits is added to the elastic tube, the scalability will be seriously deteriorated due to the limitation of materials and preparation technology.

Therefore, the original elastic tube in the prior art has the following disadvantages: 1. The pure rubber has poor tear resistance due to uncontrolled extension. 2. If the composite layer is added, the poor elasticity of the composite layer will easily cause: A. The scalability is small and cannot be pulled apart. B. The elastic modulus of each composite layer is very different, and after repeated stretching, it is easy to cause delamination due to asynchronous expansion and contraction.

Based on the above, the technical difficulties in producing high-elastic composite tubes lie in:

1. Due to the elastic force of the inner layer elastic tube, the woven layer cannot be evenly woven on the tube body, and when in stretching, the requirements of a balanced and stable scalability cannot be partially met.
2. The non-weft knitting method cannot solve the product requirements of the two-way stretching of the woven layer.
3. If the woven layer is sleeved to the inner tube, the woven layer cannot fit tightly with the inner tube.
4. The conventional weft knitting or warp knitting device cannot solve the problem that the torsion generated by the weaving rotation affects the flatness of the product surface, and will affect the fit between the woven layer and the outer elastic tube.
5. Insufficient elasticity of the woven layer or mismatched elastic coefficient of the rubber tubes will cause the elastic force of the overall composite elastic tube to fail to meet the expected demand.

In view of this, the invention provides a composite elastic tube and a preparation method therefor.

## SUMMARY OF THE INVENTION

An objective of the invention is, in view of the drawbacks in the prior art, to provide a composite elastic tube and a preparation method therefor.

To solve the above-mentioned technical problem, the invention uses the following technical solutions:

A composite elastic tube includes an inner elastic tube, an elastic woven layer, a junction of inner and outer tubes and an outer elastic tube, wherein the composite elastic tube is sequentially composed of the inner elastic tube, the elastic woven layer, the junction of inner and outer tubes and the outer elastic tube from an inner side to an outer side.

Further, the inner elastic tube and the outer elastic tube are made of natural latex or thermoplastic elastomer.

Further, the elastic woven layer is made of elastic cored yarn, and an elastic elongation of the elastic cored yarn is 100-600%.

Further, the elastic woven layer is of a weft-knitted structure that may realize four-way stretch.

Further, the weft-knitted structure includes at least one of plain stitch, rib weave or double-sided weave; further, an axial helix angle between the elastic cored yarn of the elastic woven layer and the inner elastic tube is $\alpha$; the axial helix angle $\alpha$ is calculated by:

(1) first stretching the elastic tube under different axial lengths while an angle of the axial helix angle $\alpha$ between the elastic cored yarn of the elastic woven layer and the inner elastic tube changing accordingly to obtain a stress value in local coordinates, which is transformed to principal axis coordinates via a transformation matrix, wherein if the elastic woven layer is subjected to an axial external force and when the axial helix angle between the elastic cored yarn and the inner elastic tube is $\alpha$, a stress-strain relationship in a direction of the principal axis coordinates of the elastic tube

$$\begin{bmatrix} \lambda 1 \\ \lambda 2 \\ \mu 12 \end{bmatrix} = [M] \begin{bmatrix} \lambda_X \\ \lambda_Y \\ \mu_{XY} \end{bmatrix}$$

may be expressed as: wherein $\lambda 1$ $\lambda 2$ $\mu 12$ are respectively the axial stress value, the radial stress value and the shear force value of a plane formed by an axial direction and a radial direction of the elastic tube, $\lambda_X$ $\lambda_Y$ $\mu_{XY}$ are respectively the axial stress value of the principal axis coordinates of the elastic tube, the radial stress value of the elastic tube and the shear force value of the plane formed by the axial direction and the radial direction of the elastic tube, and M is the transformation matrix

$$M = \begin{bmatrix} \cos^2\alpha & \sin^2\alpha & 2\sin\alpha\cos\alpha \\ \sin^2\alpha & \cos^2\alpha & -2\sin\alpha\cos\alpha \\ -\sin\alpha\cos\alpha & \sin\alpha\cos\alpha & \cos^2\alpha - \sin^2\alpha \end{bmatrix};$$

(2) calculating the above stress components in the direction of the principal axis coordinates of the elastic tube to obtain:

$$\lambda 1 = \lambda_X \cos^2\alpha ;$$

$$\lambda 2 = \lambda_Y \sin^2\alpha ;$$

$$\mu 12 = -\lambda_X \sin\alpha\cos\alpha ;$$

(3) according to the material properties of the elastic tube, calculating the maximum stress limit in any axial direction as follows:

$$\lambda 1 \leq \frac{K * x}{\cos^2\alpha} ,$$

$$\lambda 2 \leq \frac{KY}{sin^2\alpha} ,$$

$$\mu 12 \leq \frac{KS}{\sin\alpha\cos\alpha}$$

wherein K is the ultimate strain elastic coefficient of different materials, X is the failure strength of the elastic tube in the axial direction, Y is the failure strength of the elastic tube in the radial direction, and S is the failure shear strength of the plane formed with the axial direction and the radial direction of the elastic tube; then, a reasonable angle $\alpha$ of the axial helix angle of the elastic cored yarn and the inner elastic tube is calculated.

Further, a radial helix angle between the elastic cored yarn of the elastic woven layer and the inner elastic tube is $\beta$; the radial helix angle $\beta$ is calculated by:

$$\tau = \frac{T * R2}{I} \qquad \gamma = \frac{\lambda * R1}{L}$$

(1) according to the formula and , $\tau$ with as the cylindrical shear force, R1 as the radius of the inner elastic tube, R2 as the radius of the outer elastic tube, T as the torque, $\lambda$ as the rotation angle and L as the

$$I = \frac{\pi}{32} * \left( \frac{R2^4}{32} - \frac{R1^4}{32} \right)$$

length of the elastic tube , calculating the shear force and the shear stress of the elastic tube;

(2) first subjecting the elastic tube to a radial external force or injecting water flow of different water pressures to cause radial expansion of a water tube while an angle of the radial helix angle $\beta$ between the elastic cored yarn of the elastic woven layer and the inner elastic tube changing accordingly, wherein if the radial helix angle changes $\beta_1$ from $\beta_2$, the shear-strain variation relationship of the elastic tube may be expressed as: $\Delta\tau = P*\Delta\gamma$, wherein $\Delta\tau = \Delta\{\tau1, \tau2\}^M$, $\Delta\tau$ represents the shear change value from $\beta_1$ to $\beta_2$, $\tau1$ is the shear value under $\beta_1$, $\tau_2$ is the shear value under $\beta_2$, and M is the number of times of shear tests when $\beta_1$ changes to $\beta_2$;

$$P = \begin{bmatrix} C_1 G_1 & 0 \\ 0 & C_2 G_2 \end{bmatrix}$$

, P is the shear force variation flexibility matrix, $C_1$ and $C_2$ are respectively the radial helix angle $\beta_1$ and the shear force correction coefficient under the radial helix angle $\beta_2$, and $G_1$ and $G_2$ are respectively the radial helix angle $\beta_1$ and the shear force coefficient under the radial helix angle $\beta_2$; $\Delta\gamma = \Delta\{\gamma1, \gamma2\}^M$, $\Delta\gamma$ represents the change value of the shear stress from $\beta_1$ to $\beta_2$, $\gamma1$ is the shear stress value under $\beta_1$, and $\gamma2$ is the shear stress value under $\beta_2$; obtaining the variation range of the radial helix angle $\beta$ according to the above formula.

Further, according to the variation range of the radial helix angle $\beta$, a ratio between a radius and a thickness of the outer elastic tube of the composite elastic tube is calculated as: R2/(R2-R1)=30.

Further, the junction of inner and outer tube and an outer elastic tube fills between the elastic woven layers.

A preparation method for the composite elastic tube includes steps of:

step 1: preparing a compounded rubber, impregnating or extruding the inner elastic tube form natural latex or thermoplastic elastomer, and placing a non-elastic silicone fixed-stretch core in the middle, so as to obtain a fixed-stretch elastic inner tube;

step 2: fixing the fixed-stretch elastic inner tube to a lower conveyor roller set below a movable turntable;

step 3: selecting the elastic cored yarn with an elastic elongation of 10100-600% as an elastic textile layer material;

step 4: customizing a specific device for specific casing weaving, with the radius of the inner elastic tube as R1 and the radius of the outer elastic tube as R2, so that the ratio between the radius and the thickness of the outer elastic tube of the composite elastic tube is: R2/( R2-R1)=30, and a flat woven layer with direct casing weaving and non-rotational weft knitting to eliminate torsion where an inner diameter of a fabric is fully fitted to an outer diameter of the inner tube is achieved;

step 5: starting the weaving of a tubular fabric, which specifically includes steps of changing a weft yarn density and a weft yarn width of the fabric by adjusting, exchanging, and changing upper and lower gears, wherein the weft yarn is a single weft yarn, and the weft yarn density is 6-70 turns/CM;

step 6: adjusting an opening and feeding the wefts while keeping the inner elastic tube from fluctuating with a start of a weaving beam and a loom;

step 7: after completing the weaving, overcoating an outer layer with natural latex or thermoplastic elastomer, and then treating the surface.

With the above technical solutions, the invention has the following beneficial effects:

The invention provides a composite elastic tube and a preparation method therefor. In the invention, by providing a reasonable axial helix angle $\alpha$ and a reasonable radial helix angle $\beta$ in the radial direction between the elastic cored yarn of the elastic woven layer and the inner elastic tube, the elastic cored yarn is a combination of layers arranged, which may ensure that on the original basis, the elastic woven layer may be stretched to a limit of 7-8 without deformation, and a diameter of the tube may be expanded by 1.5 times to 3 times while still maintaining good bonding strength with the inner elastic tube and the outer elastic tube.

## BRIEF DESCRIPTION OF THE DRAWINGS

Further description of the invention will be made below in combination with drawings.

Fig. 1 is a three-dimensional structure diagram of a composite elastic tube according to the invention.
Fig. 2 is a structure diagram of an inner part of the composite elastic tube according to the invention.
Fig. 3 is a cross-sectional structure diagram of the invention along a direction A in Fig. 2.
Fig. 4 is a structure diagram when the composite elastic tube is not stretched according to an embodiment of the invention.
Fig. 5 is a structure diagram when the composite elastic tube is normally stretched according to an embodiment of the invention.
Fig. 6 is a structure diagram when the composite elastic tube is stretched to the limit according to an embodiment of the invention.
Fig. 7 is a relationship diagram between, for the composite elastic tube, a value in a control range for a ratio between a radius and a thickness of the outer elastic tube and the number of turns required to produce wrinkled areas according to an embodiment of the invention.

In figures: inner elastic tube 1, elastic woven layer 2, junction of inner and outer tubes 3, outer elastic tube 4.

## DESCRIPTION OF THE PREFERRED EMBODIMENTS

Exemplary embodiments will be described in detail herein, and examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the present invention. Rather, they are merely examples of apparatuses and methods consistent with aspects of the present invention are recited in the appended claims.

The terminologies used in the present invention are for the purpose of describing embodiments only and are not intended to limit the present invention. As used in the invention and the appended claims, the singular forms "a" and "said" and "the" are intended to include the plural forms as well, unless the context clearly dictates otherwise. It should also be understood that the term "and/or" as used herein refers to and includes any and all possible combinations of one or more of the associated listed items.

It should be understood that although the terms first, second, third, etc. may be used in the present invention to describe various information, the information should not be limited to these terms. These terms are only used to distinguish information of the same type from one another. For example, without departing from the scope of the present invention, first information may also be called second information, and similarly, second information may also be called first information. Depending on the context, the word "if" as used herein may be interpreted as "at" or "when" or "in response to a determination".

In order to illustrate the technical schemes in the present invention more clearly, the following will be described in the form of specific embodiments.

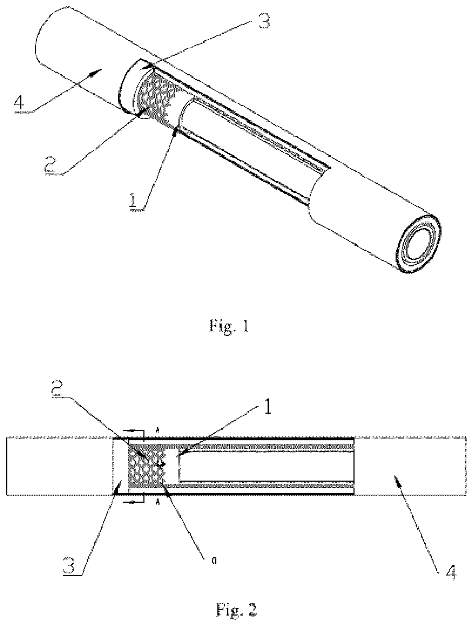

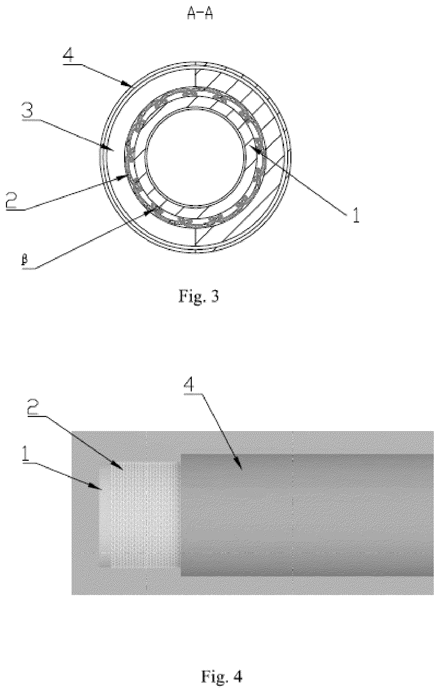

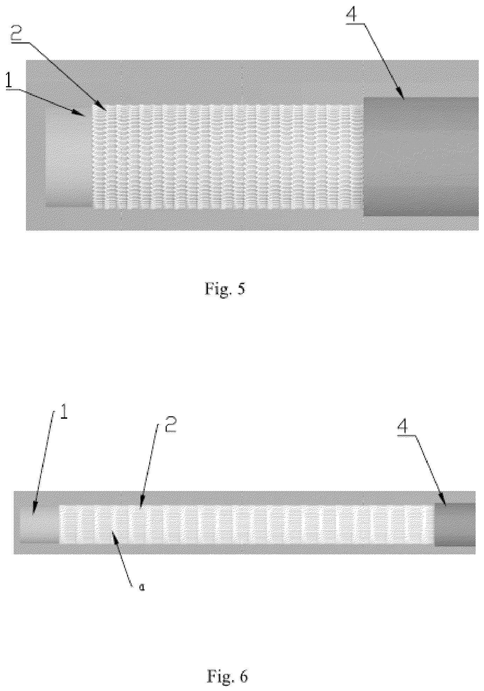

With reference to Figs. 1 to 6, a composite elastic tube includes an inner elastic tube 1, an elastic woven layer 2, a junction of inner and outer tubes 3 and an outer elastic tube 4, wherein the composite elastic tube is sequentially composed of the inner elastic tube 1, an elastic woven layer, the junction of inner and outer tubes 3 and the outer elastic tube 4 from an inner side to an outer side.

As a further description of the invention, the inner elastic tube 1 and the outer elastic tube 4 are made of natural latex or thermoplastic elastomer.

As a further description of the invention, the elastic woven layer 2 is made of elastic cored yarn, and an elastic elongation of the elastic cored yarn is 10-600%.

As a further description of the invention, the elastic woven layer 2 is composed of a round weft-knitted structure that may realize four-way stretch.

As a further description of the invention, an axial helix angle between the elastic cored yarn of the elastic woven layer 2 and the inner elastic tube 1 is $\alpha$; the axial helix angle $\alpha$ is calculated by:

(1) first stretching the elastic tube under different axial lengths while an angle of the axial helix angle $\alpha$ between the elastic cored yarn of the elastic woven layer 2 and the inner elastic tube 1 changing accordingly to obtain a stress value in local coordinates, which is transformed to principal axis coordinates via a transformation matrix, wherein if the elastic woven layer 2 is subjected to an axial external force and when the axial helix angle between the elastic cored yarn and the inner elastic tube 1 is $\alpha$, a stress-strain relationship in a direction of the principal axis coordinates of the elastic tube may be expressed as:

$$\begin{bmatrix} \lambda 1 \\ \lambda 2 \\ \mu 12 \end{bmatrix} = [M] \begin{bmatrix} \lambda_X \\ \lambda_Y \\ \mu_{XY} \end{bmatrix}$$

wherein $\lambda 1$ $\lambda 2$ $\mu 12$ are respectively the axial stress value, the radial stress value and the shear force value of a plane formed by an axial direction and a radial direction of the elastic tube, $\lambda_X \lambda_Y \mu_{XY}$ are respectively the axial stress value of the principal axis coordinates of the elastic tube, the radial stress value of the elastic tube and the shear force value of the plane formed by the axial direction and the radial direction of the elastic tube, and M is the transformation matrix

$$M = \begin{bmatrix} \cos^2\alpha & \sin^2\alpha & 2\sin\alpha\cos\alpha \\ \sin^2\alpha & \cos^2\alpha & -2\sin\alpha\cos\alpha \\ -\sin\alpha\cos\alpha & \sin\alpha\cos\alpha & \cos^2\alpha - \sin^2\alpha \end{bmatrix} ;$$

(2) calculating the above stress components in the direction of the principal axis coordinates of the elastic tube to obtain:

$$\lambda 1 = \lambda_X \cos^2\alpha \; ;$$

$$\lambda 2 = \lambda_Y \sin^2\alpha \; ;$$

$$\mu 12 = -\lambda_X \sin\alpha\cos\alpha \; ;$$

(3) according to the material properties of the elastic tube, calculating the maximum stress limit in any axial direction as follows:

$$\lambda 1 \leq \frac{K * x}{\cos^2\alpha} \; ,$$

$$\lambda 2 \leq \frac{KY}{\sin^2\alpha} \; ,$$

$$\mu 12 \leq \frac{KS}{\sin\alpha\cos\alpha}$$

wherein K is the ultimate strain elastic coefficient of different materials, X is the failure strength of the elastic tube in the axial direction, Y is the failure strength of the elastic tube in the radial direction, and S is the failure shear strength of the plane formed with the axial direction and the radial direction of the elastic tube; then, a reasonable angle $\alpha$ of the axial helix angle of the elastic cored yarn and the inner elastic tube 1 is calculated.

As a further description of the invention, a radial helix angle between the elastic cored yarn of the elastic woven layer 2 and the inner elastic tube 1 is $\beta$; the radial helix angle $\beta$ is calculated by:

$$\tau = \frac{T * R2}{I} \qquad \gamma = \frac{\lambda * R1}{L}$$

(1) according to the formula $\qquad$ and $\qquad$, $\tau$ with as the cylindrical shear force, with R1 as the radius of the inner elastic tube 1, R2 as the radius of the outer elastic tube 4, T as the torque, $\lambda$ as the rotation angle and

$$I = \frac{\pi}{32} * \left( \frac{R2^4}{32} - \frac{R1^4}{32} \right)$$

L as the length of the elastic tube $\qquad$, calculating the shear force and the shear stress of the elastic tube;

(2) first subjecting the elastic tube to a radial external force or injecting water flow of different water pressures to cause radial expansion of a water tube while an angle of the radial helix angle $\beta$ between the elastic cored yarn of the elastic woven layer 2 and the inner elastic tube 1 changing accordingly, wherein if the radial helix angle changes $\beta_1$ from $\beta_2$, the shear-strain variation relationship of the elastic tube may be expressed as: $\Delta\tau = P*\Delta\gamma$, wherein $\Delta\tau = \Delta\{\tau 1, \tau 2\}^M$, $\Delta\tau$ represents the shear change value from $\beta_1$ to $\beta_2$, $\tau 1$ is the shear value under $\beta_1$, $\tau 2$ is the shear value under $\beta_2$, and M is the number of times of shear tests when $\beta_1$ changes to $\beta_2$;

$$P = \begin{bmatrix} C_1 G_1 & 0 \\ 0 & C_2 G_2 \end{bmatrix}$$

, P is the shear force variation flexibility matrix, $C_1$ and $C_2$ are respectively the radial helix angle $\beta_1$ and the shear force correction coefficient under the radial helix angle $\beta_2$, and $G_1$ and $G_2$ are respectively the radial helix angle $\beta_1$ and the shear force coefficient under the radial helix angle $\beta_2$;

$\Delta\gamma = \Delta\{\gamma 1, \gamma 2\}^M$, $\Delta\gamma$ represents the change value of the shear stress from $\beta_1$ to $\beta_2$, $\gamma 1$ is the shear stress value under $\beta_1$, and $\gamma 2$ is the shear stress value under $\beta_2$;

obtaining the variation range of the radial helix angle $\beta$ according to the above formula.

As a further description of the invention, according to the variation range of the radial helix angle $\beta$, a ratio between a radius and a thickness of the outer elastic tube of the composite elastic tube 4 is calculated as: R2/(R2-R1)=30.

As a further description of the invention, the junction of inner and outer tubes 3 and an outer elastic tube fills between the elastic woven layers 2.

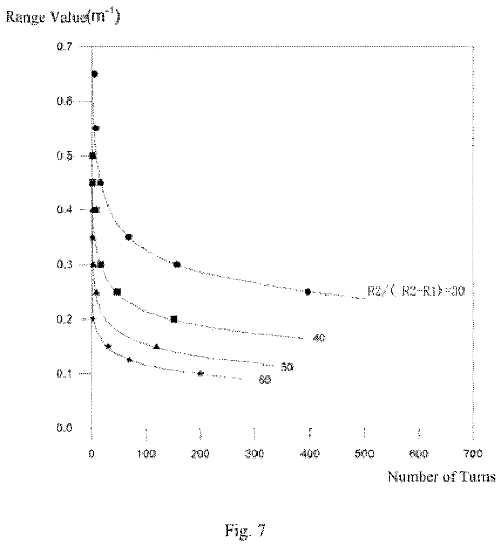

As a further description of the invention, the radius of the inner elastic tube 1 is configured as R1 and the radius of the outer elastic tube 4 is configured as R2, so that the ratio between the radius and the thickness of the outer elastic tube 4 of the composite elastic tube is: R2/(R2-R1)=30. With reference to Fig. 7, Fig. 7 is a relationship diagram between, for the composite elastic tube, a value in a control range for a ratio between a radius and a thickness of the outer elastic tube 4 and the number of turns required to produce wrinkled areas according to an embodiment of the invention. From the Fig. 7, it can be known that in the invention, when the ratio of the radius to the thickness of the outer elastic tube 4 of the composite elastic tube is 30, it can withstand a higher range value under the same number of turns. In other words, the invention may withstand more number of turns.

A preparation method for the composite elastic tube includes steps of:

step 1: preparing a compounded rubber, impregnating or extruding the inner elastic tube 1 form natural latex or thermoplastic elastomer, and placing a non-elastic silicone fixed-stretch core in the middle, so as to obtain a fixed-stretch elastic inner tube;

step 2: fixing the fixed-stretch elastic inner tube to a lower conveyor roller set below a movable turntable;

step 3: selecting the elastic cored yarn with an elastic elongation of 1000-600% as an elastic textile layer material;

step 4: customizing a specific device for specific casing weaving, with the radius of the inner elastic tube 1 as R1 and the radius of the outer elastic tube 4 as R2, so that the ratio between the radius and the thickness of the outer elastic tube 4 of the composite elastic tube is: R2/( R2-R1)=30, and a flat woven layer with direct casing weaving and non-rotational weft knitting to eliminate torsion where an inner diameter of a fabric is fully fitted to an outer diameter of the inner tube is achieved;

step 5: starting the weaving of a tubular fabric, which specifically includes steps of changing a weft yarn density and a weft yarn width of the fabric by adjusting, exchanging, and changing upper and lower gears, wherein the weft yarn is a single weft yarn, and the weft yarn density is 6-70 turns/CM;

step 6: adjusting an opening and feeding the wefts while keeping the inner elastic tube 1 from fluctuating with a start of a weaving beam and a loom;

step 7: after completing the weaving, overcoating an outer layer with natural latex or thermoplastic elastomer, and then treating the surface.

In the invention, by providing a reasonable axial helix angle $\alpha$ and a reasonable radial helix angle $\beta$ in the radial direction between the elastic cored yarn of the elastic woven layer and the inner elastic tube 1, the elastic cored yarn is a combination of layers arranged, which may ensure that on the original basis, the elastic woven layer may be stretched to a limit of 7-8 without deformation, and a diameter of the tube may be expanded by 1.5 times to 3 times while still maintaining good bonding strength with the inner elastic tube 1 and the outer elastic tube 4.

The invention adopts the above technical solutions, and the actual production test has the following beneficial effects:

1. Comparison of differences in application of fixed-stretch technology: After the fixed-stretch technology is used, it can ensure that the number of turns per centimeter of the produced rubber tube is within 3% of the error, while the error of the inner elastic tube 1 without fixed-stretch technology will reach 60%, and the error of the elongation rate will also be from almost very small to 60% in the same way.

2. The tear resistance value of the newly compounded elastic woven layer is greatly improved. For example, the tear resistance value of the 6*9MM inner tube is increased from 20BL to 38BL, and the large TATO tube for special bungee jumping may reach 2000BL.

3. The problem of broken tubes without damage is completely solved: the fracture value of the newly composite elastic woven layer is different, which reduces the safety accident rate of about 2% caused by the accidental molecular fracture to 0 when the original pure rubber tube is not damaged.

4. Through the optimization of the number of needles in the latitude direction and the density in the longitude direction, the weaving holes of the fabric may achieve the best angle when stretching, and the maximum stretch rate is increased from 500% to 800%.

5. The number of times for tensile resistance after damage is increased by more than 5 times, and the number of times for tensile resistance of the pure rubber tube after damage is increased from about <120 times to >600 times, which also greatly reduces safety accidents.

Embodiment 1:

Step one: A compounded rubber is prepared, and an inner elastic tube 1 is extruded, wherein a diameter of the inner elastic tube is 5MM.

Step two: The inner elastic tube 1 is fixed to a lower conveying roller set below a movable turntable.

Step three: an elastic cored yarn is selected as an elastic textile layer material, wherein the specification of the elastic cored yarn is 20D.

Step four: a weft yarn is not twisted, and the weft yarn is wound into a cop suitable for the size of the shuttle of the circular knitting machine.

Step five: the weaving of a tubular fabric is initiated, which specifically includes steps of changing a weft yarn density and a weft yarn width of the fabric by adjusting, exchanging, and changing upper and lower gears, wherein the weft yarn is a single weft yarn, and the weft yarn density is 6 turns/CM.

Step six: an opening is adjusted and the wefts are fed while fixing a shaft of the lower conveying roller set to keep the inner elastic tube 1 from fluctuating with a start of a weaving beam and a loom.

Step seven: after completing the weaving, the outer layer is overcoated with natural latex or thermoplastic elastomer to form the outer elastic tube, a diameter of the outer elastic tube is 9MM, and then the surfaces are treated to be smooth.

1. The synchronization of the upper and lower conveying wheels is precisely controlled by a servo motor to synchronize the speed of cores before and after the weaving, so as to ensure that when the cores are subjected to the weft knitting and weaving, upper and lower conveying cores before and after the weaving are synchronized without tearing, and the conveying is uniform and stable.

2. The conveying speed of the cores and a leveling-down speed of the woven layer are controlled by computer programs, so that the production of a fixed number of turns for every 1CM the fabric layer conveyed by the cores (the density of the weft yarn is adjusted to 6-70 turns/CM according to product requirements), and then the tightness for each turn is adjusted properly and fixed, thereby realizing the complete synchronization of inside and outside without wrinkling.

Comparison of performances for the composite elastic tube of the invention and the conventional pure rubber tube and the conventional composite rubber tube with weaving layers when using the same material of the rubber tubes and having the same diameter of inner tubes (6*9MM) are shown in Table 1:

Table 1

| | Maximum elongation (axial) | Maximum elongation (radial) | Molecular sporadic fragmentation rate | Number of times for tensile resistance after outer tube is damaged | Tear resistance value |
|---|---|---|---|---|---|
| Composite elastic tube of the invention | 800% | 800% | 0% | 600 | 120B L |
| Pure rubber tube | 700% | 700% | 2% | 120 | 20BL |
| Conventional composite rubber tube with weaving layers | 260% | 200% | 1% | 600 | 38BL |
| Cloth inserted rubber tube | 100% | 100% | 2% | 120 | 20BL |

Comparative Example 1:

Step one: A compounded rubber is prepared, and an inner elastic tube 1 is extruded, wherein a diameter of the inner elastic tube is 5MM, a non-elastic silicone fixed-stretch core is not placed in the middle of the inner elastic tube, and the inner elastic tube has not been fixed-stretched.

Step two: The inner elastic tube 1 is fixed to a lower conveying roller set below a movable turntable.

Step three: an elastic cored yarn is selected as an elastic textile layer material, wherein the specification of the elastic cored yarn is 20D.

Step four: a weft yarn is not twisted, and the weft yarn is wound into a cop suitable for the size of the shuttle of the circular knitting machine.

Step five: the weaving of a tubular fabric is initiated, which specifically includes steps of changing a weft yarn density and a weft yarn width of the fabric by adjusting, exchanging, and changing upper and lower gears, wherein the weft yarn is a single weft yarn, and the weft yarn density is 6 turns/CM.

Step six: an opening is adjusted and the wefts are fed while not fixing a shaft of the lower conveying roller set.

Step seven: after completing the weaving, the outer layer is overcoated with natural latex or thermoplastic elastomer to form the outer elastic tube, a diameter of the outer elastic tube is 9MM, and then the surfaces are treated to be smooth.

Comparative Example 2:

Step one: A compounded rubber is prepared, and an inner elastic tube 1 is extruded, wherein a diameter of the inner elastic tube is 5MM.

Step two: an elastic cored yarn is selected as an elastic textile layer material, wherein the specification of the elastic cored yarn is 60D.

Step three: a weft yarn is not twisted, and the weft yarn is wound into a cop suitable for the size of the shuttle of the circular knitting machine.

Step four: the weaving of a tubular fabric is initiated, which specifically includes steps of changing a weft yarn density and a weft yarn width of the fabric by adjusting, exchanging, and changing upper and lower gears, wherein the weft yarn is a single weft yarn, and the weft yarn density is 6 turns/CM.

Step five: the inner elastic tube 1 is sleeved into a tubular fabric that has been woven.

Step six: after completing the weaving, the outer layer is overcoated with natural latex or thermoplastic elastomer to form the outer elastic tube, a diameter of the outer elastic tube is 9MM, and then the surfaces are treated to be smooth.

The uniformities of elongation of composite elastic tube using different weaving processes/steps are shown in Table 2. Compared with Embodiment 1, the density per unit length of the woven layer will be not uniform if the fixed-stretch treatment is not carried out and the central axis of the lower conveying roller set is not fixed, or the method of weaving the tubular fabric first and then inserting it into the inner elastic tube, thereby affecting the uniformity of the overall elongation of the composite elastic tube.

Table 2 Uniformity of Elongation of Composite Elastic Tube Using Different Weaving Processes/Steps

| | Overall elongation |
|---|---|
| Embodiment 1 | 700% (Uniform) |
| Comparative Example 1 | Local 100-200% |
| | Local 100-700% (Not Uniform) |
| Comparative Example 2: | Local 100-300% |
| | Local 100-500% (Not Uniform) |

The technical schemes of the present invention are described in conjunction with the preferred embodiments shown in the accompanying drawings, however, those skilled in the art will easily understand that the protection scope of the present invention is obviously not limited to these specific embodiments. Without departing from the principles of the present invention, those skilled in the art can make equivalent modifications or substitutions to related technical features, and the technical schemes after these modifications or substitutions will all fall within the protection scope of the present invention.

The above descriptions are merely preferred embodiments of the present invention and are not intended to limit the present invention. Any modifications, equivalent replacements, improvements, etc. made within the spirit and principles of the present invention shall be included in the present invention within the scope of protection.

**Claims**

1. A composite elastic tube, comprising:

   an inner elastic tube;
   an elastic woven layer;
   a junction of inner and outer tubes; and
   an outer elastic tube;
   wherein the composite elastic tube is sequentially composed of the inner elastic tube, the elastic woven layer, the junction of inner and outer tubes and the outer elastic tube from an inner side to an outer side.

2. The composite elastic tube according to claim 1, wherein the inner elastic tube and the outer elastic tube are made of natural latex or thermoplastic elastomer.

3. The composite elastic tube according to claim 1, wherein the elastic woven layer is made of elastic cored yarn, and an elastic elongation of the elastic cored yarn is 100-600%.

4. The composite elastic tube according to claim 1, wherein the elastic woven layer is of a weft-knitted structure that may realize four-way stretch.

5. The composite elastic tube according to claim 1, wherein an axial helix angle between the elastic cored yarn of the elastic woven layer and the inner elastic tube is $\alpha$; the axial helix angle $\alpha$ is calculated by:

   (1) first stretching the elastic tube under different axial lengths while an angle of the axial helix angle $\alpha$ between the elastic cored yarn of the elastic woven layer and the inner elastic tube changing accordingly to obtain a stress value in local coordinates, which is transformed to principal axis coordinates via a transformation matrix, wherein if the elastic woven layer is subjected to an axial external force and when the axial helix angle between the elastic cored yarn and the inner elastic tube is $\alpha$, a stress-strain relationship in a direction of the principal axis coordinates

$$\begin{bmatrix} \lambda1 \\ \lambda2 \\ \mu12 \end{bmatrix} = \begin{bmatrix} M \end{bmatrix}\begin{bmatrix} \begin{bmatrix} \lambda_X \\ \lambda_Y \\ \mu_{XY} \end{bmatrix} \end{bmatrix}$$

   of the elastic tube may be expressed as:                    wherein $\lambda1$ $\lambda2$ $\mu12$ are respectively the axial stress value, the radial stress value and the shear force value of a plane formed by an axial direction and a radial direction of the elastic tube, $\lambda_X$ $\lambda_Y$ $\mu_{XY}$ are respectively the axial stress value of the principal axis coordinates of the elastic tube, the radial stress value of the elastic tube and the shear force value of the plane formed by the axial direction and the radial direction of the elastic tube, and M is the transformation matrix

$$M = \begin{bmatrix} \cos^2\alpha & \sin^2\alpha & 2\sin\alpha\cos\alpha \\ \sin^2\alpha & \cos^2\alpha & -2\sin\alpha\cos\alpha \\ -\sin\alpha\cos\alpha & \sin\alpha\cos\alpha & \cos^2\alpha - \sin^2\alpha \end{bmatrix};$$

(2) calculating the above stress components in the direction of the principal axis coordinates of the elastic tube to obtain:

$$\lambda1 = \lambda_X \cos^2\alpha ;$$

$$\lambda2 = \lambda_Y \sin^2\alpha ;$$

$$\mu12 = -\lambda_X \sin\alpha\cos\alpha ;$$

(3) according to the material properties of the elastic tube, calculating the maximum stress limit in any axial direction as follows:

$$\lambda1 \leq \frac{K * x}{\cos^2\alpha} ,$$

$$\lambda2 \leq \frac{KY}{sin^2\alpha} ,$$

$$\mu12 \leq \frac{KS}{\sin\alpha\cos\alpha}$$

wherein K is the ultimate strain elastic coefficient of different materials, X is the failure strength of the elastic tube in the axial direction, Y is the failure strength of the elastic tube in the radial direction, and S is the failure shear strength of the plane formed with the axial direction and the radial direction of the elastic tube; then, a reasonable angle $\alpha$ of the axial helix angle of the elastic cored yarn and the inner elastic tube is calculated.

6. The composite elastic tube according to claim 1, wherein a radial helix angle between the elastic cored yarn of the elastic woven layer and the inner elastic tube is $\beta$; the radial helix angle $\beta$ is calculated by:

$$\tau = \frac{T * R2}{I} \qquad \gamma = \frac{\lambda * R1}{L}$$

(1) according to the formula and , $\tau$ with as the cylindrical shear force, R1 as the radius of the inner elastic tube, R2 as the radius of the outer elastic tube, T as the torque, $\lambda$ as the rotation angle and

$$I = \frac{\pi}{32} * \left( \frac{R2^4}{32} - \frac{R1^4}{32} \right)$$

L as the length of the elastic tube , calculating the shear force and the shear stress of the elastic tube;

(2) first subjecting the elastic tube to a radial external force or injecting water flow of different water pressures to cause radial expansion of a water tube while an angle of the radial helix angle $\beta$ between the elastic cored yarn of the elastic woven layer and the inner elastic tube changing accordingly, wherein if the radial helix angle changes $\beta_1$ from $\beta_2$, the shear-strain variation relationship of the elastic tube may be expressed as:

$\Delta\tau = P * \Delta\gamma$, wherein $\Delta\tau = \Delta\{\tau1, \tau2\}^M$, $\Delta\tau$ represents the shear change value from $\beta_1$ to $\beta_2$, $\tau1$ is the shear value under $\beta_1$, $\tau2$ is the shear value under $\beta_2$, and M is the number of times of shear tests when $\beta_1$ changes to $\beta_2$;

$$P = \begin{bmatrix} C_1 G_1 & 0 \\ 0 & C_2 G_2 \end{bmatrix}$$

, P is the shear force variation flexibility matrix, $C_1$ and $C_2$ are respectively the radial helix angle $\beta_1$ and the shear force correction coefficient under the radial helix angle $\beta_2$, and $G_1$ and $G_2$ are respectively the radial helix angle $\beta_1$ and the shear force coefficient under the radial helix angle $\beta_2$; $\Delta\gamma = \Delta\{\gamma 1, \gamma 2\}^M$, $\Delta\gamma$ represents the change value of the shear stress from $\beta_1$ to $\beta_2$, $\gamma 1$ is the shear stress value under $\beta_1$, and $\gamma 2$ is the shear stress value under $\beta_2$; obtaining the variation range of the radial helix angle $\beta$ according to the above formula.

7.  The composite elastic tube according to claim 1, wherein according to the variation range of the radial helix angle $\beta$, a ratio between a radius and a thickness of the outer elastic tube of the composite elastic tube is calculated as: R2/(R2-R1)=30.

8.  The composite elastic tube according to claim 1, wherein the junction of inner and outer tube and an outer elastic tube fills between the elastic woven layers.

9.  A preparation method for the composite elastic tube, comprising steps of:

    step 1: preparing a compounded rubber, impregnating or extruding the inner elastic tube form natural latex or thermoplastic elastomer, and
    placing a non-elastic silicone fixed-stretch core in the middle, so as to obtain a fixed-stretch elastic inner tube;
    step 2: fixing the fixed-stretch elastic inner tube to a lower conveyor roller set below a movable turntable;
    step 3: selecting the elastic cored yarn with an elastic elongation of 10100-600% as an elastic textile layer material;
    step 4: customizing a specific device for specific casing weaving, with the radius of the inner elastic tube as R1 and the radius of the outer elastic tube as R2, so that the ratio between the radius and the thickness of the outer elastic tube of the composite elastic tube is: R2/( R2-R1)=30, and a flat woven layer with direct casing weaving and non-rotational weft knitting to eliminate torsion where an inner diameter of a fabric is fully fitted to an outer diameter of the inner tube is achieved;
    step 5: starting the weaving of a tubular fabric, which specifically includes steps of changing a weft yarn density and a weft yarn width of the fabric by adjusting, exchanging, and changing upper and lower gears, wherein the weft yarn is a single weft yarn, and the weft yarn density is 6-70 turns/CM;
    step 6: adjusting an opening and feeding the wefts while keeping the inner elastic tube from fluctuating with a start of a weaving beam and a loom;
    step 7: after completing the weaving, overcoating an outer layer with natural latex or thermoplastic elastomer, and then treating the surface.

EP 4 592 435 A1

Fig. 1

Fig. 2

A-A

Fig. 3

Fig. 4

Fig. 5

Fig. 6

Fig. 7

## INTERNATIONAL SEARCH REPORT

| | International application No. |
| --- | --- |
| | **PCT/CN2023/126322** |

| A. | CLASSIFICATION OF SUBJECT MATTER |
| --- | --- |

D04B1/00(2006.01)i

According to International Patent Classification (IPC) or to both national classification and IPC

| B. | FIELDS SEARCHED |
| --- | --- |

Minimum documentation searched (classification system followed by classification symbols)

IPC:DO4B，B32B，B05D

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC: 编织层, 弹力, 管, 方法, 宽度, 乳胶, 纬纱, 制备, 涂层, 半径, 厚度, Woven, layer, elasticity, tube+, method+, width, latex, yarn, preparation, coat+, radius, thickness

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115992412 A (YAN CHUAN) 21 April 2023 (2023-04-21)<br>claims 1-9 | 1-9 |
| X | CN 207161912 U (ZHEJIANG HELEN PLASTIC CO., LTD.) 30 March 2018 (2018-03-30)<br>description, paragraphs 17-29, and figure 1 | 1-4 |
| A | CN 107631107 A (ZHEJIANG DINGYUAN PLASTIC-RUBBER CO., LTD.) 26 January 2018 (2018-01-26)<br>entire document | 1-9 |
| A | CN 110553103 A (YANGJIANG NEW SPORTS TECHNOLOGY PRODUCTS CO., LTD.) 10 December 2019 (2019-12-10)<br>entire document | 1-9 |
| A | CN 112644046 A (YAN CHUAN) 13 April 2021 (2021-04-13)<br>entire document | 1-9 |
| A | CN 209487246 U (SHENZHEN WAHCHANGWEI INDUSTRIAL CO., LTD.) 11 October 2019 (2019-10-11)<br>entire document | 1-9 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 December 2023** | **22 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 592 435 A1**

**INTERNATIONAL SEARCH REPORT**

| International application No. |
| --- |
| **PCT/CN2023/126322** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 210950261 U (GUANGZHOU TIANHE RUBBER HOSE PRODUCTS CO., LTD.) 07 July 2020 (2020-07-07) <br> entire document | 1-9 |
| A | GB 898246 A (UNITED STATES RUBBER COMPANY) 06 June 1962 (1962-06-06) <br> entire document | 1-9 |

Form PCT/ISA/210 (second sheet) (July 2022)

18

**INTERNATIONAL SEARCH REPORT**
Information on patent family members

International application No.

**PCT/CN2023/126322**

| Patent document cited in search report | | | Publication date (day/month/year) | Patent family member(s) | | | Publication date (day/month/year) |
|---|---|---|---|---|---|---|---|
| CN | 115992412 | A | 21 April 2023 | None | | | |
| CN | 207161912 | U | 30 March 2018 | NZ | 742354 | A | 26 July 2019 |
| | | | | AU | 2018100583 | A4 | 07 June 2018 |
| CN | 107631107 | A | 26 January 2018 | None | | | |
| CN | 110553103 | A | 10 December 2019 | US | 2021062939 | A1 | 04 March 2021 |
| | | | | US | 11519526 | B2 | 06 December 2022 |
| | | | | EP | 3786504 | A1 | 03 March 2021 |
| | | | | EP | 3786504 | B1 | 07 September 2022 |
| CN | 112644046 | A | 13 April 2021 | None | | | |
| CN | 209487246 | U | 11 October 2019 | None | | | |
| CN | 210950261 | U | 07 July 2020 | None | | | |
| GB | 898246 | A | 06 June 1962 | BE | 602937 | A | 16 August 1961 |

Form PCT/ISA/210 (patent family annex) (July 2022)